# EUROPEAN PATENT APPLICATION

(11) **EP 4 597 307 A1**
(43) Date of publication of application: **06.08.2025**
(21) Application number: 25305108.0
(22) Date of filing: 28.01.2025
(51) Int. Cl.: G06F 8/65, G06F 8/656

(54) **COMPONENT UPDATING METHOD, ELECTRICAL DEVICE, ELECTRONIC DEVICE AND STORAGE MEDIUM**

(30) Priority: 29.01.2024 CN 202410124062
(71) Applicant: Schneider Electric Industries SAS, 92500 Rueil Malmaison (FR)
(72) Inventor: YANG, Lei, Shenzhen, 518000 (CN); LI, Huayu, Shenzhen, 518000 (CN)
(74) Representative: Manitz Finsterwald Patent- und Rechtsanwaltspartnerschaft mbB

(57) **Abstract**

Embodiments of the disclosure provide a component updating method, an electrical device, an electronic device and a storage medium. The method includes: in response to an update indication for a functional component of the electrical device, sharing, by the functional component, state data of an output channel to a booting component of the electrical device, the output channel being configured to control a load of the electrical device, and the state data indicating a working state of the output channel; in response to switching from the functional component to the booting component, recovering, by the booting component, the working state of the output channel based on the shared state data; and updating, by the booting component, the functional component based on received update data. Therefore, the working state of the output channel can be maintained in a process of the booting component updating the functional component.

## Description

### FIELD

Example embodiments of the present disclosure generally relate to the field of electrical equipment, and in particular, to a component updating method, an electrical device, an electronic device, and a computer-readable storage medium.

### BACKGROUND

An application program on a conventional electrical device typically requires irregular updating to optimize experience of a user. However, during a process of updating an application program, a load of the electrical device may be abnormally switched off until completion of the updating of the application program. Such an interruption of output of the load caused by the updating of the application program can lead to poor experience for the user. It is therefore desirable to optimize the design.

### SUMMARY

In a first aspect of the present disclosure, a component updating method is provided. The method includes: in response to an update indication for a functional component of the electrical device, sharing, by the functional component, state data of an output channel to a booting component of the electrical device, the output channel being configured to control a load of the electrical device, and the state data indicating a working state of the output channel; in response to switching from the functional component to the booting component, recovering, by the booting component, the working state of the output channel based on the shared state data; and updating, by the booting component, the functional component based on received update data.

In a second aspect of the present disclosure, an electrical device is provided. The electrical device includes: a load; a processing circuitry coupled to the load to control the load and configured to: in response to an update indication for a functional component of the electrical device, cause the functional component to share state data of an output channel to a booting component of the electrical device, the output channel being configured the load of the electrical device, and the state data indicating a working state of the output channel; in response to switching from the functional component to the booting component, cause the booting component to recover the working state of the output channel based on the shared state data; and cause the booting component to update the functional component based on received update data.

In a third aspect of the present disclosure, an electronic device is provided. The electronic device includes at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the present disclosure, a computer-readable storage medium is provided. The computer readable storage medium has stored thereon a computer program executable by a processor to implement the method of the first aspect.

It should be understood that content described in this content section is not intended to limit key features or important features of embodiments of the present disclosure, nor is it intended to limit a scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following detailed description taken in conjunction with drawings. In the drawings, the same or similar reference numerals denote the same or similar elements, wherein:
FIG. 1 illustrates a schematic diagram of an electrical device according to some embodiments of the present disclosure;
FIG. 2 illustrates a flowchart of a component updating process according to some embodiments of the present disclosure;
FIG. 3 illustrates a schematic diagram of a functional component updating process according to some embodiments of the present disclosure;
FIG. 4 illustrates a flowchart of a process of component updating according to some embodiments of the present disclosure; and
FIG. 5 illustrates a block diagram of an electrical device capable of implementing various embodiments of the present disclosure.

### DETAILED DESCRIPTION

It may be understood that, before technical solutions disclosed in embodiments of the present disclosure are used, user should be notified of the type, use range, use scenario, etc. of the personal information involved in the present disclosure and authorized by the user in an appropriate manner according to related laws and regulations.

For example, in response to that an active request of a user is received, prompt information is sent to the user to explicitly prompt the user, and an operation requested to be performed by the user needs to obtain and use personal information of the user. Therefore, the user can autonomously select, according to the prompt information, whether to provide personal information to software or hardware such as an electronic device, an application program, a server or a storage medium that performs operations of the technical solutions of the present disclosure.

As an optional but non-limiting implementation manner, in response to receiving the active request of the user, a manner of sending the prompt information to the user may be, for example, a pop-up window manner, and pop-up window may present the prompt information in a text manner. In addition, the pop-up window may further carry a selection control for the user to select "agree" or "disagree" to provide personal information to the electronic device.

It may be understood that the foregoing process of notifying and acquiring user authorization is merely illustrative, and does not constitute a limitation on the implementations of the present disclosure, and other manners that meet related laws and regulations may also be applied to the implementations of the present disclosure.

It can be understood that data (including but not limited to data itself, data acquisition or use) involved in this technical solution should comply with requirements of corresponding laws and regulations and related regulations.

Embodiments of the present disclosure will be described in more detail below with reference to the drawings. While certain embodiments of the present disclosure are illustrated in the drawings, it should be understood that the present disclosure may be embodied in various forms and should not be construed as limited to the embodiments set forth herein, but rather, these embodiments are provided to provide a more thorough and complete understanding of the present disclosure. It should be understood that the drawings and embodiments of the present disclosure are only used for example, and are not intended to limit a protection scope of the present disclosure.

It should be noted that headings of any of sections/subsections provided herein are not limiting. Various embodiments are described herein throughout, and any type of embodiment may be included under any section/subsection. Further, the embodiments described in any section/subsection may be combined in any manner with any other embodiments described in the same section/subsection and/or different sections/sections.

In description of embodiments of the present disclosure, the term "including" and similar terms thereof should be understood as open-ended inclusion, that is, "including but not limited to". The term "based on" should be understood to be "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," etc. may refer to different or identical objects. Other explicit and implicit definitions may also be included below.

As mentioned above, in some application scenarios, during a process of updating an application program on a conventional electrical device, a load of the electrical device may be abnormally switched off until completion of the updating of the application program. Such an interruption of output of the load caused by the updating of the application program can lead to poor experience for the user. Therefore, how to ensure that the load maintains a normal output state in an application update process without interruption becomes a concern.

In view of this, embodiments of the present disclosure provide a solution for component updating. In this solution, in response to an update indication for a functional component of the electrical device, sharing, by the functional component, state data of an output channel to a booting component of the electrical device, the output channel being configured to control a load of the electrical device, and the state data indicating a working state of the output channel. In response to switching from the functional component to the booting component, recovering, by the booting component, the working state of the output channel based on the shared state data. Then, updating, by the booting component, the functional component based on received update data. In this way, the booting component can maintain the working state of the output channel in the process of updating the functional component, so that the output of the load is not interrupted, and experience of the user is improved.

Example embodiments of the present disclosure will be described in detail below with reference to the drawings.

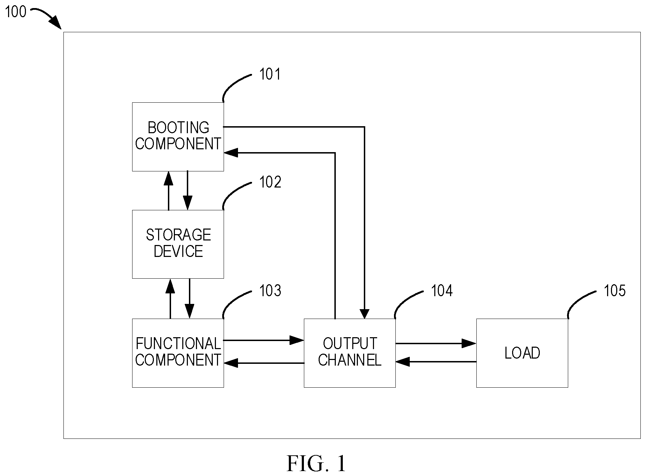

FIG. 1 illustrates a schematic diagram of an electrical device 100 according to some embodiments of the present disclosure. As shown in FIG. 1, the electrical device 100 described herein generally includes a booting component 101, a storage device 102, a functional component 103, an output channel 104, and a load 105. The electrical device 100 may be any type of electrical device having a firmware upgrade function, for example, an electrical device working based on a KNX protocol, an electrical device applied to a smart home scenario or a guest room control scenario, etc., and embodiments of the present disclosure are not limited in a type and an application scenario of the electrical device. In some embodiments, data generated by the booting component 101 and the functional component 103 may be collectively stored in the storage device 102. In a case that electrical device 100 operates normally, the functional component 103 may control the load 105 through the output channel 104. In some embodiments, the functional component 103 may be an application program for implementing a target function. The application program may control the load 105 through the output channel 104 to achieve the target function, such as controlling switching on or off of an electric lamp. In some embodiments, the booting component 101 may be a booting program for implementing application program updating. In a case that the application program needs to be updated, the booting program may receive update data to update the application program. In some embodiments, the storage device 102 may be any type of storage component, such as a Flash memory, a read-only memory (ROM), etc., which is not limited in embodiments of the present disclosure.

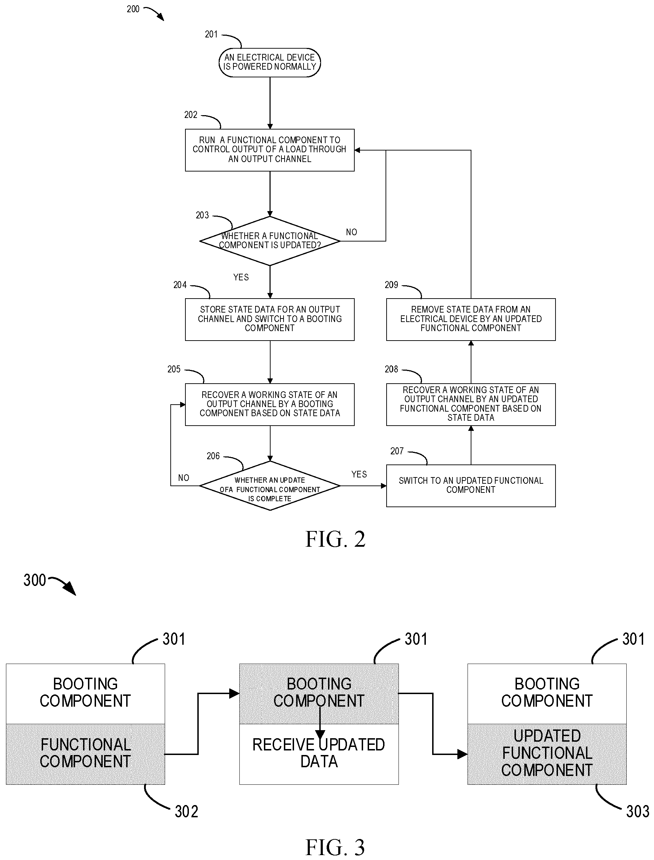

FIG. 2 illustrates a flowchart of a component updating process 200 according to some embodiments of the present disclosure. In some embodiments, the component updating process 200 may be performed at the electrical device 100 as shown in FIG. 1. It should be understood that the component updating process 200 may further include additional blocks not shown and/or may omit certain (or some) blocks shown, and the scope of the present disclosure is not limited in this respect.

At block 201, the electrical device is powered normally. The electrical device starts working normally. At block 202, the electrical device runs a functional component to control output of a load through an output channel. At block 203, it is determined whether the functional component is updated. If the functional component does not need to be updated, the component updating process 200 proceeds back to block 202. If the functional component needs to be updated, the component updating process 200 proceeds to block 204.

At block 204, the electrical device stores state data of the output channel and switches to a booting component. At block 205, the working state of the output channel is recovered by the booting component based on the state data. At block 206, it is determined whether the updating of the functional component is completed. If the updating of the functional component is not completed, the component updating process 200 proceeds back to block 205. If the updating of the functional component has been completed, the component updating process 200 proceeds to block 207.

At block 207, the electrical device switches to the updated functional component. At block 208, the working state of the output channel is recovered by the updated functional component based on the state data. At block 209, the state data is removed from the electrical device by the updated functional component. The component updating process 200 then re-proceeds to block 202. So far, the updating of a single component ends.

FIG. 3 illustrates a schematic diagram of a functional component updating process 300 according to some embodiments of the present disclosure. The updating process of the functional components will be described in detail below with reference to FIG. 2 and FIG. 3. In some embodiments, in a case that an update indication is not received by the electrical device, a functional component 302 operates normally and controls output of a load through an output channel (as shown in block 202 of FIG. 2). In response to receiving the update indication, the functional component 302 may share state data of the output channel to a booting component 301. In some embodiments, the functional component 302 may store the state data into a storage device shared by the booting component 301 and the functional component 302, and then switch to the booting component 301 (as shown in block 204 of FIG. 2). In some embodiments, the load may be an electric lamp. The state data may include channel data, switch data, brightness data, and color temperature data. The channel data is configured to indicate identification information of the output channel. The switch data is configured to indicate switching on or off of the electric lamp. The brightness data is configured to indicate brightness of the electric lamp. The color temperature data is configured to indicate a color temperature of the electric lamp.

In response to switching from the functional component 302 to the booting component 301, the booting component 301 may recover the working state of the output channel based on the shared state data. In some embodiments, the booting component 301 may read the state data from the storage device to recover the working state of the output channel (as shown in block 205 of FIG. 2). In a case that the working state of the output channel is recovered, the booting component 301 may receive update data of the functional component 302 to update the functional component 302. Updating manner may be implemented by using any wired or wireless update data transmission technology, which is not limited in embodiments of the present disclosure.

In response to completion of updating of the functional component 302, the booting component 301 may switch to the updated functional component 303 (as shown in block 207 of FIG. 2). The updated functional component 303 may recover the working state of the output channel based on the shared state data (as shown in block 208 of FIG. 2). In some embodiments, the updated functional component 303 may read the state data from the storage device to recover the working state of the output channel. In a case that the working state of the output channel is recovered, the updated functional component 303 may remove the state data from the electrical device (as shown in block 209 of FIG. 2).

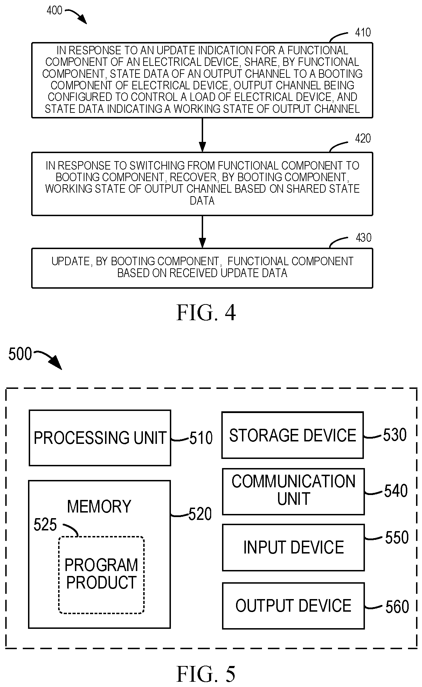

FIG. 4 illustrates a flowchart of a process 400 of component updating according to some embodiments of the present disclosure. For example, the process 400 may be implemented at an electrical device.

At block 410, in response to an update indication for a functional component of an electrical device, sharing, by the functional component, state data of an output channel to a booting component of the electrical device, the output channel being configured to control a load of the electrical device, and the state data indicating a working state of the output channel. At block 420, in response to switching from the functional component to the booting component, recovering, by the booting component, the working state of the output channel based on the shared state data. At block 430, updating, by the booting component, the functional component based on received update data.

In some embodiments, sharing, by the functional component, state data of the output channel to a booting component of the electrical device includes: storing, by the functional component, the state data into a storage device shared by the booting component and the functional component, and restoring, by the booting component, the working state of the output channel based on the shared state data includes: reading, by the booting component, the state data from the storage device.

In some embodiments, the process 400 further includes: in response to completion of updating of the functional component, performing switching from the booting component to the updated functional component.

In some embodiments, the process 400 further includes: in response to the switching from the booting component to the updated functional component, restoring, by the updated functional component, the working state of the output channel based on the shared state data.

In some embodiments, the process 400 further includes: in response to the recovering of the working state of the output channel, removing, by the updated functional component, the state data from the electrical device.

In some embodiments, the state data includes at least one of the following: channel data indicating identification information of the output channel; switch data indicating whether the load is switched on or off; brightness data indicating brightness of the load; and color temperature data indicating a color temperature of the load.

FIG. 5 shows a block diagram of an electrical device 500 capable of implementing various embodiments of the present disclosure. It should be understood that the electrical device 500 shown in FIG. 5 is merely exemplary and should not constitute any limitation on functionality and scope of the embodiments described herein. The electrical device 500 may be configured to perform the method described above, for example, may be implemented as an electrical device.

As shown in FIG. 5, the electrical device 500 is in a form of a generic electronic device. Components of the electrical device 500 may include, but are not limited to, one or more processors or processing units 510, memory 520, storage device 530, one or more communication units 540, one or more input devices 550, and one or more output devices 560. The processing unit 510 may be an actual or virtual processor and can perform various processes according to programs stored in the memory 520. In a multi-processor system, multiple processing units execute computer-executable instructions in parallel to improve a parallel processing capability of the electronic device 500.

The electronic device 500 typically includes a plurality of computer storage media. Such media may be any accessible media accessible to the electronic device 500, including but not limited to volatile and non-volatile media, removable and non-removable media. The memory 520 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium, such as a flash drive, a magnetic disk, or any other medium, which may be capable of storing information and/or data and which may be accessed within the electronic device 500.

The electronic device 500 may further include additional removable/non-removable, volatile/non-volatile storage media. Although not shown in FIG. 5, a magnetic disk drive for reading from or writing to a removable, non-volatile magnetic disk (e.g., a "floppy disk") and an optical disk drive for reading from or writing to a removable, non-volatile optical disk may be provided. In these cases, each drive may be connected to a bus (not shown) by one or more data media interfaces. The memory 520 may include a computer program product 525 having one or more program modules configured to perform various methods or acts of various embodiments of the present disclosure.

The communication unit 540 communicates with other electronic devices through a communication medium. Additionally, functionality of components of the electronic device 500 may be implemented in a single computing cluster or multiple computing machines capable of communicating over a communication connection. Thus, electronic device 500 may operate in a networked environment using logical connections to one or more other servers, network personal computers (PCs), or another network node.

The input device 550 may be one or more input devices, such as a mouse, keyboard, trackball, or the like. The output devices 560 may be one or more output devices, such as displays, speakers, printers, and the like. The electronic device 500 may also communicate with one or more external devices (not shown) through the communication unit 540 as needed, such as a storage device, a display device, etc., with one or more devices that enable a user to interact with the electronic device 500, or with any device (e.g., a network card, a modem, etc. ) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, there is further provided a computer program product tangibly stored on a non-transitory computer readable medium and comprising computer executable instructions which are executed by a processor to implement the method described above.

Various aspects of the present disclosure are described herein with reference to flowchart illustrations and/or block diagrams of methods, apparatuses, devices, and computer program products implemented according to the present disclosure. It should be understood that each block of the flowcharts and/or block diagrams and combinations of blocks in the flowcharts and/or block diagrams may be implemented by computer-readable program instructions.

These computer-readable program instructions may be provided to a processing unit of a general purpose computer, special purpose computer, or other programmable data processing device to produce a machine, such that the instructions, when executed by the processing unit of the computer or other programmable data processing device, produce means for implementing the functionalities/acts specified in the flowchart and/or block diagram block or blocks. These computer-readable program instructions may also be stored in a computer-readable storage medium that causes a computer, programmable data processing device, and / or other devices to function in a particular manner, such that the computer-readable medium having instructions stored thereon includes an article of manufacture including instructions that implement various aspects of the functionalities / acts specified in the flowchart and/or block diagram block or blocks.

The computer-readable program instructions may be loaded onto the computer, other programmable data processing device, or other device such that a series of operational steps are performed on the computer, other programmable data processing device, or other device to produce a computer-implemented process such that the instructions that execute on the computer, other programmable data processing apparatus, or other device implement the functionalities/acts specified in the flowchart and/or block diagram block or blocks.

The flowchart and block diagrams in the drawings illustrate architecture, functionality, and operation of possible implementations of systems, methods, and computer program products according to various implementations of the present disclosure. In this regard, each block in a flowchart or block diagram may represent a module, a program segment, or a portion of an instruction that contains one or more executable instructions for implementing specified logical functionalities. In some alternative implementations, the functionalities noted in the blocks may also occur in a different order than those noted in the drawings. For example, two consecutive blocks may actually be executed substantially in parallel, or they may sometimes be executed in reverse order, depending on the functionality involved. It is also noted that each block in the block diagrams and/or flowcharts, and combinations of blocks in the block diagrams and/or flowcharts, may be implemented with a dedicated hardware-based system that performs specified functionalities or actions, or may be implemented with a combination of dedicated hardware and computer instructions.

Implementations of the present disclosure have been described above, and the above description is exemplary, not exhaustive, and is not limited to the disclosed implementations. Many modifications and alterations will be apparent to those of ordinary skill in the art without departing from scope and spirit of the illustrated implementations. Selection of terms as used herein is intended to best explain principles of various implementations, practical applications or improvements to technology in the market, or to enable others of ordinary skill in the art to understand various implementations disclosed herein.

## Claims

1. A component updating method (400), comprising:
in response to an update indication for a functional component (103) of an electrical device (100), sharing **(410),** by the functional component (103), state data of an output channel (104) to a booting component (101) of the electrical device (100), the output channel (104) being configured to control a load (105) of the electrical device (100), and the state data indicating a working state of the output channel (104);
in response to switching from the functional component (103) to the booting component (101), recovering (420), by the booting component (101), the working state of the output channel (104) based on the shared state data; and
updating (430), by the booting component (101), the functional component (103) based on received update data.

2. The method (400) of claim 1, wherein sharing, by the functional component (103), state data of an output channel (104) to a booting component (101) of the electrical device (100) comprises:
storing, by the functional component (103), the state data into a storage device (102) shared by the booting component (101) and the functional component (103), and
wherein recovering, by the booting component (101), the working state of the output channel (104) based on the shared state data comprises:
reading, by the booting component (101), the state data from the storage device (102).

3. The method (400) of claim 1 or 2, further comprising: in response to completion of updating of the functional component (103), performing switching from the booting component (101) to the updated functional component (103).

4. The method (400) of claim 3, further comprising:
in response to the switching from the booting component (101) to the updated functional component (103), recovering, by the updated functional component (103), the working state of the output channel (104) based on the shared state data.

5. The method (400) of claim 4, further comprising:
in response to the recovering of the working state of the output channel (104), removing, by the updated functional component (103), the state data from the electrical device (100).

6. The method (400) of any of claims 1 to 5, wherein the state data comprises at least one of:
channel data indicating identification information of the output channel (104);
switching data indicating whether the load (105) is switched on or off;
brightness data indicating a brightness of the load (105); and
color temperature data indicating a color temperature of the load (105).

7. An electrical device (100) comprising:
a load (105);
a processing circuitry coupled to the load (105) to control the load (105) and configured to:
in response to an update indication for a functional component (103) of an electrical device (100), cause the functional component (103) to share state data of an output channel (104) to a booting component (101) of the electrical device (100), the output channel (104) being configured to control a load (105) of the electrical device (100), and the state data indicating a working state of the output channel (104);
in response to switching from the functional component (103) to the booting component (101), cause the booting component (101) to recover the working state of the output channel (104) based on the shared state data; and
cause the booting component (101) to update the functional component (103) based on received update data.

8. The electrical device (100) of claim 7, wherein the device further comprises a storage device (102) shared by the booting component (101) and the functional component (103), and the processing circuitry is further configured to cause the functional component (103) to store the state data into the storage device (102) and cause the booting component (101) to read the state data from the storage device (102).

9. The electrical device (100) of claim 7 or 8, wherein the processing circuitry is further configured to perform switching from the booting component (101) to the updated functional component (103) in response to completion of updating of the functional component (103).

10. The electrical device (100) of claim 9, wherein the processing circuitry is further configured to cause the updated functional component (103) to recover the working state of the output channel (104) based on the shared state data in response to the switching from the booting component (101) to the updated functional component (103).

11. The electrical device (100) of claim 9, wherein the processing circuitry is further configured to cause the updated functional component (103) to remove the state data from the electrical device (100) in response to the recovering of the working state of the output channel (104).

12. The electrical device (100) of any of claims 7 to 11, wherein the state data comprises at least one of:
channel data indicating identification information of the output channel (104);
switching data indicating whether the load (105) is switched on or off;
brightness data indicating a brightness of the load (105); and
color temperature data indicating a color temperature of the load (105).

13. An electronic device (500), comprising:
at least one processing unit (510); and
at least one memory (520) coupled to the at least one processing unit (510) and storing instructions for execution by the at least one processing unit (510), the instructions, when executed by the at least one processing unit (510), causing the electronic device (500) to perform the method (400) of any of claims 1 to 6.

14. A computer-readable storage medium having stored thereon a computer program executable by a processor to implement the method (400) of any of claims 1 to 6.
